# FASCICULE DE BREVET EUROPEEN

(11) **EP 0 543 434 B1**
(45) Date de publication et mention de la délivrance du brevet: **26.06.1996**
(21) Numéro de dépôt: 92203318.8
(22) Date de dépôt: 28.10.1992
(51) Int. Cl.: G11B 5/17

(54) **Tête magnétique ayant un système de bobinages à compensation des fuites magnétiques**
Magnetkopf mit Wicklungsanordnung zur Kompensation von magnetischen Verlusten
Magnetic head with a system of coils compensating magnetic leakage

(30) Priorité: 08.11.1991 FR 9113772
(43) Date de publication de la demande: 26.05.1993
(73) Titulaire: SCHLUMBERGER INDUSTRIES, F-92120 Montrouge (FR)
(72) Inventeur: Juncker, Richard, F-92370 Chaville (FR)

(56) Documents cités:
- EP-A- 0 218 814
- EP-A- 0 412 261
- FR-A- 2 571 532
- PATENT ABSTRACTS OF JAPAN vol. 10, no. 101 (P-447)17 April 1986
- PATENT ABSTRACTS OF JAPAN vol. 11, no. 342 (P-635)(2789) 10 November 1987
- PATENT ABSTRACTS OF JAPAN vol. 14, no. 191 (P-1038)(4134) 18 April 1990

## Description

La présente invention a pour objet une tête magnétique d'écriture et/ou de lecture pour un dispositif de type magnétoscope numérique. Elle s'applique notamment à l'enregistrement et/ou la lecture d'un signal magnétique dans un dispositif du type possédant plusieurs têtes magnétiques disposées à proximité les unes des autres et présentant de ce fait un risque de diaphonie dû aux fuites magnétiques.

Divers types de tête magnétique sont connus pour l'écriture et/ou la lecture de signaux magnétiques correspondant à des informations numériques.

Dans sa réalisation la plus simple, une tête magnétique comprend un circuit magnétique ou noyau en matériau magnétique, par exemple du ferrite. Ce noyau présente la forme d'un U dont les extrémités des deux branches ou jambes se rejoignent en un entrefer dans lequel est positionné un séparateur en matériau amagnétique.

Un bobinage est enroulé autour de la partie du noyau reliant les deux jambes (partie opposée à l'entrefer) ou bien autour d'une des jambes. Le bobinage peut être aussi réparti sur chacune des jambes.

Un pôle du bobinage est connecté au circuit électronique d'écriture et/ou de lecture tandis que l'autre pôle du bobinage est porté au potentiel de masse ou à une autre partie du circuit électronique. Par exemple, en écriture, un signal électrique délivré par le circuit électronique d'écriture parcourt le bobinage engendrant ainsi un champ magnétique longitudinal correspondant.

Le champ magnétique est canalisé dans le noyau; le champ de fuite créé au niveau de l'entrefer enregistre les informations sur un support magnétique placé à proximité de l'entrefer.

En lecture, le flux magnétique provenant du support est dévié dans le circuit magnétique et engendre un signal électrique dans le bobinage. Le signal électrique est amplifié et traité par le circuit électronique de lecture.

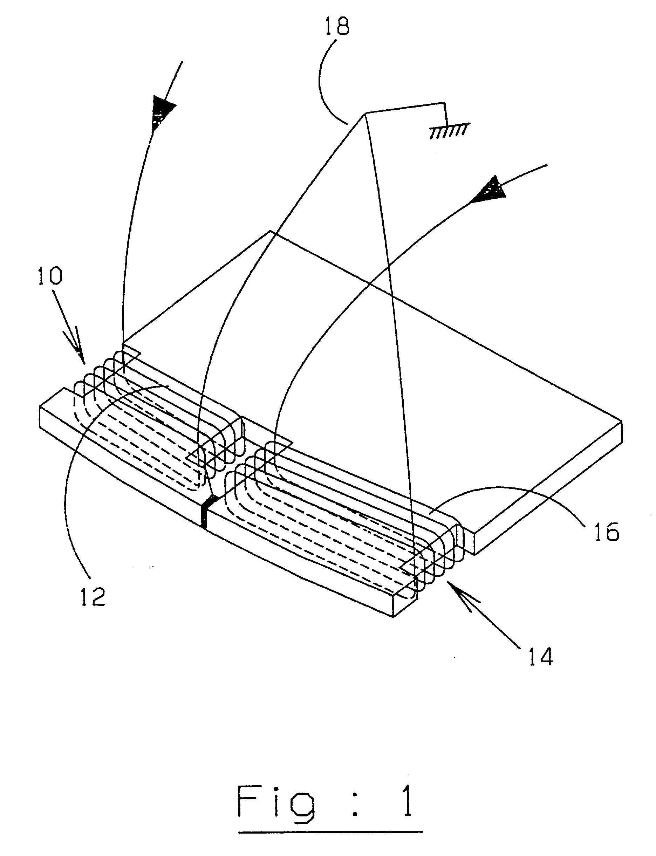

Ce type de réalisation pose des problèmes électriques. C'est pourquoi on utilise un autre type de tête magnétique représenté schématiquement sur la figure 1.

Ces têtes magnétiques connues possèdent un premier bobinage 10 enroulé autour d'une des jambes 12 du noyau en U et un second bobinage 14 enroulé autour de l'autre jambe 16 de manière identique au premier bobinage. Ces deux bobinages sont reliés électriquement en un point milieu 18, le sens d'enroulement de ces bobinages étant tel qu'un courant parcourant le premier vers le point milieu engendre un champ magnétique de même intensité et de sens contraire à celui engendré par un même courant parcourant le second également vers le point milieu.

Pour obtenir le résultat souhaité, à savoir la résolution des problèmes électriques évoqués précédemment, la connexion 18 ou point milieu reliant le premier bobinage 10 au second 14 est portée au potentiel de masse. Chaque bobinage est connecté à un circuit électronique d'écriture et/ou de lecture (non représenté) et est utilisé indépendamment de l'autre.

Par exemple, en écriture de signaux numériques constitués par conséquent de 0 et de 1, le premier bobinage 10 est affecté à l'écriture des 0 alors que le second bobinage 14 est affecté à l'écriture des 1, les champs magnétiques de sens contraires, engendrés par ces bobinages 10,14 correspondant aux 0 et aux 1. Les bobinages 10 et 14 sont découplés grâce au point milieu commun 18 porté au potentiel de masse.

Ce type de dispositif, s'il est satisfaisant d'un point de vue électrique, présente des inconvénients du point de vue magnétique.

En effet, dans les dispositifs de ce type, lorsqu'un courant parcourt l'un ou l'autre des bobinages, le champ magnétique engendré n'est pas canalisé en totalité dans le noyau: il apparait une fuite magnétique, un rayonnement vers l'extérieur en provenance du bobinage sollicité.

L'intensité de ce rayonnement parasite est comprise dans une gamme allant de 1/10000 à 1/1000 de l'intensité du champ magnétique canalisé dans le circuit magnétique. Quoique faible, elle est suffisante pour être perçue par les autres têtes magnétiques placées à proximité.

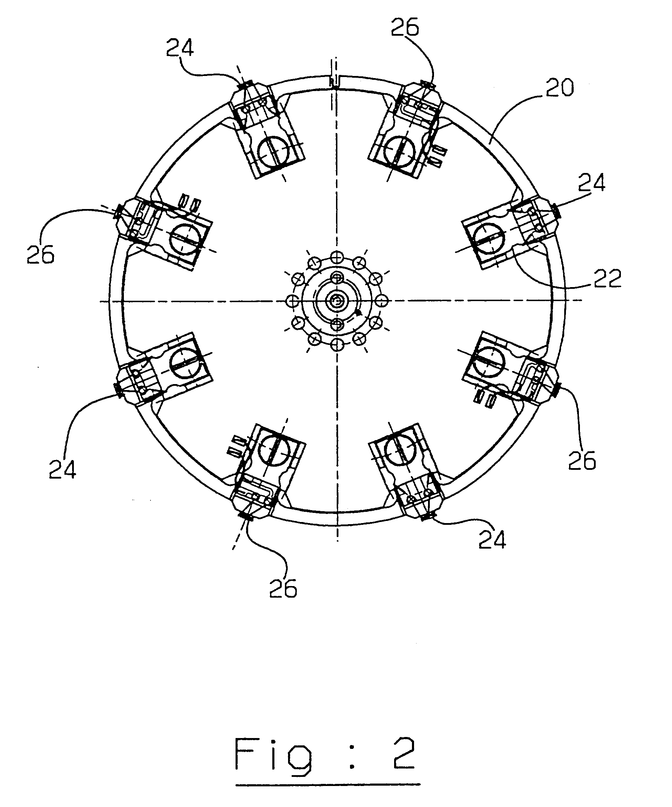

Par exemple, on peut voir sur la figure 2 une représentation schématique d'un plateau tournant 20, à la périphérie duquel sont fixés les supports 22 des têtes magnétiques. Ce type de dispositif fait partie d'un enregistreur/lecteur du type "à têtes tournantes". Les têtes magnétiques 24 dédiées à l'écriture alternent avec les têtes magnétiques 26 dédiées à la lecture et sont donc au voisinage immédiat de celles-ci.

La distance séparant deux têtes magnétiques 24 et 26 est de l'ordre de quelques millimètres à quelques centimètres. Ainsi le rayonnement de fuite émis par un bobinage lors d'une écriture peut être lu par une tête de lecture voisine et engendrer des phénomènes de diaphonie.

Dans les dispositifs connus, pour éviter ce rayonnement de fuite perturbateur, chacune des têtes magnétiques d'un enregistreur/lecteur magnétique est placée dans un boîtier métallique (non représenté sur la figure 2) servant de blindage.

On comprend que cette solution de l'art antérieur comporte des inconvénients. Le boîtier de blindage est une pièce rapportée qui demande des manipulations supplémentaires pour sa mise en place. L'encombrement de chaque tête est augmentée de façon notable, ce qui est très gênant dans des dispositifs où la miniaturisation maximum est recherchée. Enfin le boîtier de blindage, métallique, entraîne un surcoût de la tête magnétique.

On connait d'après le document Patent Abstracts of Japan & JP-A-60231904 une tête magnétique pour signal numérique qui comprend un noyau en matériau magnétique sensiblement en forme de U comportant deux jambes ayant des extrémités positionnées en regard l'une de l'autre formant entrefer, et un séparateur en matériau amagnétique placé dans l'entrefer.

Cette tête magnétique comprend en outre un système de double bobinage dans lequel chaque bobinage est enroulé pour moitié autour d'une jambe du noyau et pour moitié autour de l'autre jambe afin de diminuer le nombre de passages de chaque bobinage dans l'espace entre les deux jambes, ce qui permet ainsi de réduire les risques d'endommagement du fil constituant le bobinage.

Cependant, ce document n'enseigne pas à l'homme du métier ce qu'il doit faire pour éviter les problèmes dûs à la présence d'un rayonnement de fuite émis par chaque bobinage comme expliqué ci-dessus.

Le but de la présente invention est de pallier ces inconvénients. La tête magnétique conforme à l'invention comporte un système de bobinages tel que les fuites magnétiques observées à une certaine distance (correspondant à quelques millimètres et en tout cas à moins de la distance séparant deux têtes magnétiques disposées côte à côte dans un enregistreur/lecteur) se compensent de manière à donner une résultante nulle.

De cette manière, tout risque de diaphonie est évité en faisant l'économie du boîtier de blindage.

De façon plus précise, l'invention concerne une tête magnétique pour signal numérique comprenant :
- un noyau en matériau magnétique sensiblement en forme de U comportant deux jambes ayant des extrémités positionnées en regard l'une de l'autre formant entrefer,
- un séparateur en matériau amagnétique placé dans l'entrefer,
- un système de double bobinage, chaque bobinage étant enroulé pour moitié autour d'une jambe du noyau et pour moitié autour de l'autre jambe, caractérisé en ce qu'une extrémité d'un bobinage enroulée autour d'une jambe du noyau est reliée à une extrémité de l'autre bobinage enroulée autour de l'autre jambe du noyau de manière à former un point milieu porté au potentiel de masse, et lorsqu'un courant adéquat parcourt un bobinage, celui ci est apte à créer par une moitié un champ magnétique dans un premier sens et par l'autre moitié un champ magnétique de même intensité mais de sens contraire.

De manière préférentielle, les bobinages du système à double bobinage sont identiques.

L'invention sera mieux comprise à la lecture de la description qui suit, donnée à titre explicatif et non limitatif en référence aux dessins annexés sur lesquels :
- la figure 1, déjà décrite, représente schématiquement une tête magnétique selon l'art antérieur;
- la figure 2, déjà décrite, représente schématiquement un jeu de têtes magnétiques supportées par un élément tournant dans un lecteur/enregistreur à "têtes tournantes";
- la figure 3 représente schématiquement une tête magnétique conforme à l'invention montée sur un support;
- la figure 4 représente schématiquement une tête magnétique conforme à l'invention.

En référence aux figurés 3 et 4, on décrit maintenant une tête magnétique de lecture et/ou d'écriture conforme à l'invention.

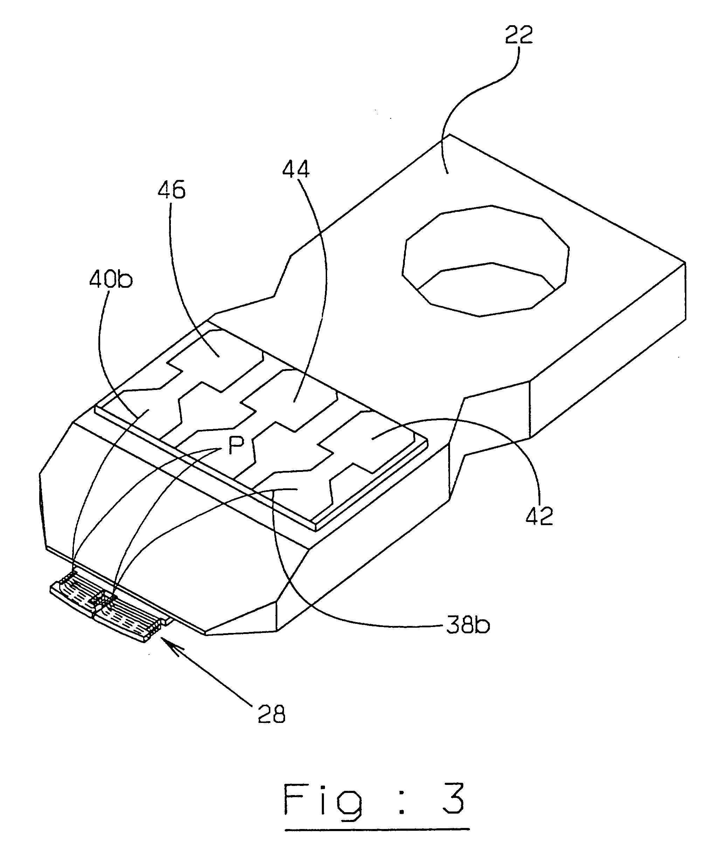

Sur la figure 3, on voit une tête magnétique 28 fixée à l'extrémité d'un support 22 apte à être monté sur un plateau tournant. On comprend que ce type de fixation n'est décrit qu'à titre illustratif et que la tête magnétique 28 conforme à l'invention peut être montée sur n'importe quel autre type de support ou directement sur le plateau.

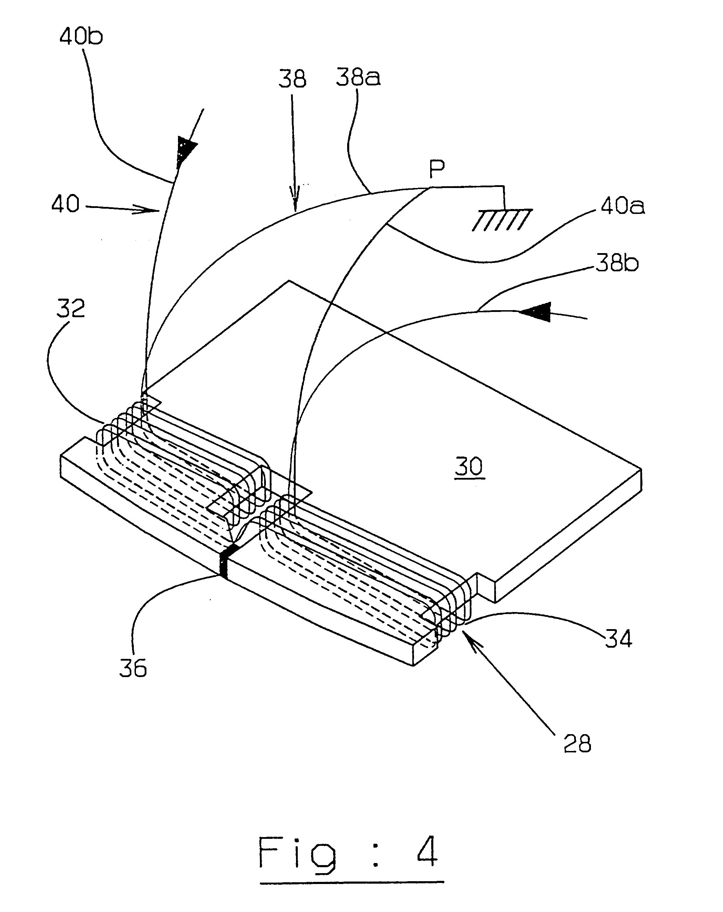

La figure 4 représente schématiquement la tête magnétique de l'invention. Celle-ci comprend un noyau 30 en matériau magnétique, par exemple du ferrite. Le noyau 30 possède sensiblement une forme en U avec deux jambes 32,34 ayant des extrémités positionnées en regard l'une de l'autre et formant l'entrefer dans lequel est logé un séparateur 36 en matériau amagnétique, par exemple du verre.

Une telle tête présente une géométrie sensiblement carrée de 2 mm de côté pour une épaisseur d'environ 150 micromètres. L'entrefer correspond à un espacement de, par exemple, 0,8 micromètre et le séparateur 36 présente une profondeur d'une quarantaine de micromètres.

Le système de bobinages utilisé conformément à l'invention est dit "à fil double". Il est constitué de deux bobinages préférentiellement identiques dont les fils sont respectivement référencés 38 et 40. Chaque bobinage est enroulé pour moitié autour de la première jambe 32 et pour moitié autour de la seconde jambe 34. De cette manière, lorsque le bobinage considéré est parcouru par un courant électrique adéquat, un champ magnétique est créé selon un premier sens dans la première jambe 32 tandis qu'un champ magnétique de même intensité mais de sens contraire est créé dans la seconde jambe 34.

Dans l'exemple représenté sur la figure 4. une extrémité 38a d'une moitié du premier bobinage 38 enroulée autour de la jambe 32 est reliée à une extrémité 40a de la moitié du second bobinage 40 enroulée autour de l'autre jambe 34 pour former un point milieu P porté au potentiel de masse.

Les caractéristiques particulières des bobinages comme le nombre de spires par exemple dépendent de l'utilisation envisagée. A titre indicatif, le nombre de spires de chaque moitié de bobinage (enroulement sur une jambe d'un bobinage) peut être de 5. Les fils conducteurs 38,40, en cuivre par exemple, peuvent présenter un diamètre de 40 micromètres.

Comme on peut le voir sur la figure 3, lorsque la tête 28 est fixée sur le support 22, l'extrémité libre 38b du fil 38 est reliée à une connexion 42, l'extrémité libre 40b du fil 40 est reliée à une connexion 46 et le point milieu P est reliée à une connexion 44. Ces connexions 42,46 permettent un raccordement électrique aisé avec les circuits électroniques de lecture et/ou d'écriture (non représentés sur la figure 3) ainsi qu'une mise au potentiel de masse pour la connexion 44.

La tête magnétique conforme à l'invention peut fonctionner en lecture ou en écriture selon le type de circuit électronique auquel elle est raccordée. Dans les dispositifs de l'art antérieur, le signal d'écriture très intense s'accompagne de fuites magnétiques non négligeables lues comme tout autre signal magnétique par les têtes de lecture voisines et entraînant un risque de diaphonie.

A nouveau en référence à la figure 4, on décrit un mode de fonctionnement en écriture d'une tête magnétique conforme à l'invention qui évite tout risque de diaphonie.

En écriture de signaux numériques, l'un des bobinages du système à double bobinage est affecté à l'écriture des 0 tandis que l'autre est affecté à l'écriture des 1.

Lorsqu'un courant adéquat, délivré par un circuit électronique d'écriture (non représenté sur la figure 4) parcourt l'un ou l'autre des bobinages 38 ou 40, il se crée un champ magnétique à l'intérieur de chaque moitié du bobinage sollicité. Les champs magnétiques présents dans chaque moitié du bobinage considéré possèdent des intensités égales mais des sens opposés. La majeure partie des champs magnétiques est canalisée dans les jambes 32 et 34 du noyau 30 où la circulation des champs magnétiques issus de chacune des moitiés du bobinage sollicité s'effectue dans le même sens et où les composantes des champs magnétiques s'ajoutent.

Par ailleurs, chacune des moitiés du bobinage sollicité émet un champ magnétique parasite de fuite qui n'est pas canalisé dans le noyau 30.

Or, considérée à une distance. de l'ordre de quelques millimètres de la tête 28, la résultante des composantes des champs magnétiques issus respectivement de chaque moitié du bobinage sollicité est nulle. En effet, chaque composante a même intensité et même direction que l'autre mais sens opposé, d'où une compensation des fuites magnétiques qui permet d'éviter le phénomène de diaphonie.

En lecture d'un signal magnétique issu d'un support défilant à proximité de la tête magnétique 28, un courant correspondant au signal magnétique circule dans chacun des bobinages qui sont alors connectés à des circuits de lecture amplificateurs (non représentés sur la figure 4) effectuant les traitements usuels.

## Revendications

1. Tête magnétique pour signal numérique comprenant :
- un noyau (30) en matériau magnétique sensiblement en forme de U comportant deux jambes (32,34) ayant des extrémités positionnées en regard l'une de l'autre formant entrefer,
- un séparateur (36) en matériau amagnétique placé dans l'entrefer,
- un système de double bobinage, chaque bobinage (38,40) étant enroulé pour moitié autour d'une jambe (32) du noyau (30) et pour moitié autour de l'autre jambe (34), carcactérisée en ce qu'une extrémité (38a) d'un bobinage (38) enroulée autour d'une jambe (32) du noyau (30) est reliée à une extrémité (40a) de l'autre bobinage (40) enroulée autour de l'autre jambe (34) du noyau (30) de manière à former un point milieu (P) porté au potentiel de masse, et lorsqu'un courant adéquat parcourt un bobinage, celui ci est apte à créer par une moitié un champ magnétique dans un premier sens et par l'autre moitié un champ magnétique de même intensité mais de sens contraire.

2. Tête magnétique selon la revendication 1, caractérisée en ce que les bobinages (38,40) du système à double bobinage sont identiques.

## Claims

1. A magnetic head for a digital signal, comprising :
- a substantially U-shaped core (30) of magnetic material having two legs (32, 34) with their ends located facing each other to form a gap,
- a separator (36) of non-magnetic material placed in the gap,
- a double coil system, each coil (38, 40) having one half wound around one (32) of the legs of the core (30) and having its other half wound around the other leg (34), characterized in that one end (38a) of a coil (38) wound around one leg (32) of the core (30) is connected to one end (40a) of the other coil (40) wound around the other leg (34) of the core (30) so as to form a midpoint (P) which is put to ground potential, and when an appropriate current flows through a coil, a first half of said coil is suitable for creating a first magnetic field in a first direction and the second half of said coil is suitable for creating a second magnetic field of the same intensity but in the opposite direction.

2. A magnetic head according to claim 1, characterized in that the coils (38, 40) of the double coil system are identical.

## Patentansprüche

1. Magnetkopf für ein digitales Signal mit:
- einem Kern (30) aus magnetischem Material, der im wesentlichen eine U-Form mit zwei Schenkeln (32, 34) hat, die einander gegenüberliegende, einen Luftspalt bildende Enden aufweisen,
- einem Trennstück (36) aus unmagnetischem Material, das in dem Luftspalt angebracht ist,
- ein Doppelwicklungssystem, wobei jede Wicklung (38, 40) zur Hälfte um einen Schenkel (32) des Kerns (30) und zur Hälfte um den anderen Schenkel (34) gewickelt ist, dadurch gekennzeichnet, daß ein Ende (38) einer um einen Schenkel (32) des Kerns (30) gewickelten Wicklung (38) mit einem Ende (40a) der anderen, um den anderen Schenkel (34) des Kerns (30) gewickelten Wicklung (40) so verbunden ist, daß ein Mittelpunkt (P) gebildet wird, der an Massepotential gelegt ist, und daß dann, wenn ein entsprechender Strom durch eine Wicklung fließt, diese durch eine Hälfte ein Magnetfeld in einer ersten Richtung und durch die andere Hälfte ein Magnetfeld der gleichen Stärke, jedoch in der entgegengesetzten Richtung erzeugen kann.

2. Magnetkopf nach Anspruch 1, dadurch gekennzeichnet, daß die Wicklungen (38, 40) des Doppelwicklungssystems identisch sind.
